# EUROPÄISCHE PATENTANMELDUNG

(11) **EP 0 917 296 A1**
(43) Veröffentlichungstag der Anmeldung: **19.05.1999**
(21) Anmeldenummer: 97119965.8
(22) Anmeldetag: 14.11.1997
(51) Int. Cl.: H04B 1/38, H04M 1/72

(54) **Batteriehalter für ein Mobiltelefon**

(71) Anmelder: Ju, Ming Lang, Yi Lan Shiang (TW)
(72) Erfinder: Ju, Ming Lang, Yi Lan Shiang (TW)
(74) Vertreter: Goddar, Heinz J., Dr.

(57) **Zusammenfassung**

Batteriehalter mit einem an eine Rückseite eines Mobiltelefons befestigten Gehäuse zum Halten einer Batterie zum Bereitstellen der für das Mobiltelefon notwendigen Arbeitsspannung, und einer Abdeckplatte, die eine vordere Öffnung des Gehäuses abdeckt, wobei das Gehäuse eine Unterseite, eine Oberseite und einen Halteflansch umfaßt, der sich von der Oberseite des Gehäuses nach unten erstreckt; die Abdeckplatte eine Unterseite, die zu der Unterseite des Gehäuses drehbar ist, eine Oberseite und einen mit der Oberseite der Abdeckplatte integralen federnden Haltestreifen aufweist, wobei der federnde Haltestreifen einen Feststellblock aufweist, der mit dem Halteflansch des Gehäuses in Eingriff gezwungen wird, um die Abdeckplatte an ihrem Platz zu halten, wenn die Abdeckplatte auf dem Gehäuse geschlossen ist.

## Beschreibung

Die vorliegende Erfindung betrifft einen Batteriehalter für ein Mobiltelefon, und insbesondere einen Batteriehalter, der an der Rückseite eines Mobiltelefons befestigt ist und zum Auswechseln der Batterie bequem geöffnet werden kann.

Normale Mobiltelefone sind üblicherweise mit einer wiederaufladbaren Batterie zum Bereitstellen der notwendigen Arbeitsspannung versehen. Da die wiederaufladbare Batterie eines normalen Mobiltelefons an der Innenseite des Gehäuses des Mobiltelefons fest eingebaut ist, kann ein Benutzer nicht die wiederaufladbare Batterie auswechseln, wenn die Batterieenergie niedrig ist. Wenn kein Batterieladegerät oder keine Energiequelle verfügbar ist, kann das Mobiltelefon nicht funktionieren, wenn die Batterieenergie der wiederaufladbaren Batterie niedrig ist.

Der Erfindung liegt somit die Aufgabe zugrunde, einen Batteriehalter für ein Mobiltelefon bereitzustellen, der es einem Benutzer erlaubt, die Batterie auszuwechseln.

Erfindungsgemäß wird die Aufgabe gelöst durch einen Batteriehalter mit einem an eine Rückseite eines Mobiltelefons befestigten Gehäuse zum Halten einer Batterie zum Bereitstellen der für das Mobiltelefon notwendigen Arbeitsspannung, und einer Abdeckplatte, die eine vordere Öffnung des Gehäuses abdeckt, wobei das Gehäuse eine Unterseite, eine Oberseite und einen Halteflansch umfaßt, der sich von der Oberseite des Gehäuses nach unten erstreckt; die Abdeckplatte eine Unterseite, die zu der Unterseite des Gehäuses drehbar ist, eine Oberseite und einen mit der Oberseite der Abdeckplatte integralen federnden Haltestreifen aufweist, wobei der federnde Haltestreifen einen Feststellblock aufweist, der mit dem Halteflansch des Gehäuses in Eingriff gezwungen ist, um die Abdeckplatte an ihrem Platz zu halten, wenn die Abdeckplatte auf dem Gehäuse geschlossen ist.

Dabei kann vorgesehen sein, daß der federnde Haltestreifen aus der Oberseite der Abdeckplatte herausgeschnitten und in eine im wesentlichen bogenförmige Gestalt gebogen ist.

Schließlich kann dabei vorgesehen sein, daß der Feststellblock des federnden Haltestreifens wie ein rechtwinkliges Dreieck gestaltet ist.

Weitere Merkmale und Vorteile der Erfindung ergeben sich anhand der Ansprüche und der nachfolgenden Beschreibung, in der ein Ausführungsbeispiel anhand der beigefügten Zeichnungen ausführlich erläutert ist. Dabei zeigt:
Fig. 1 eine Höhenansicht, die einen an einem Mobiltelefon befestigten Batteriehalter gemäß der vorliegenden Erfindung zeigt;
Fig. 2 eine weitere Höhenansicht des in Fig. 1 gezeigten Mobiltelefons, wobei der Batteriehalter geschlossen ist;
Fig. 3 den von dem Mobiltelefon gelösten Batteriehalter gemäß der vorliegenden Erfindung;
Fig. 4 eine Schnittansicht, die die Abdeckplatte des Batteriehalters gemäß der vorliegenden Erfindung in geöffnetem Zustand zeigt; und
Fig. 5 die Abdeckplatte des Batteriehalters im geöffneten Zustand und mit aus dem Batteriehalter gemäß der vorliegenden Erfindung herausgenommener Batterie.

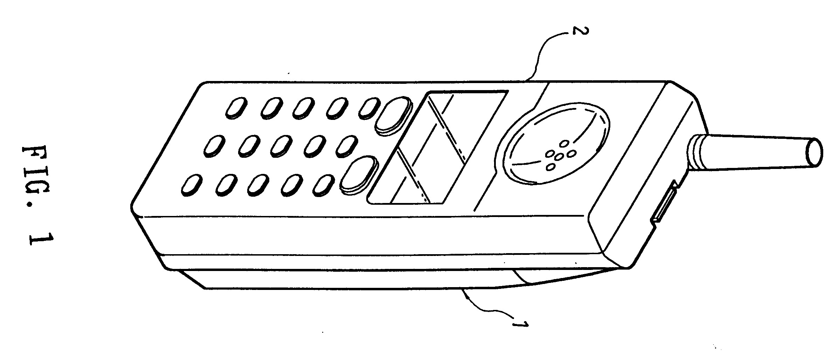

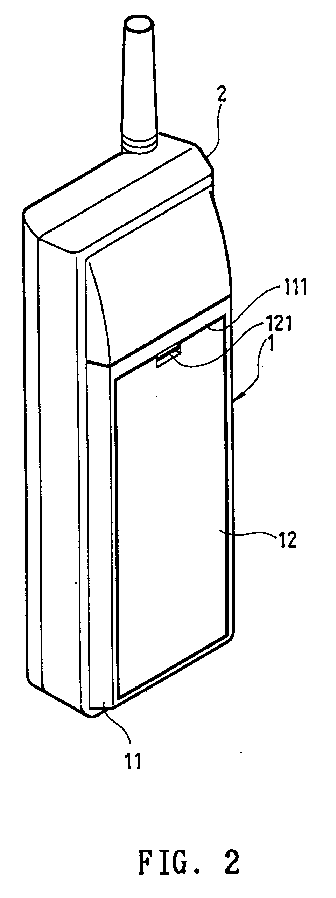

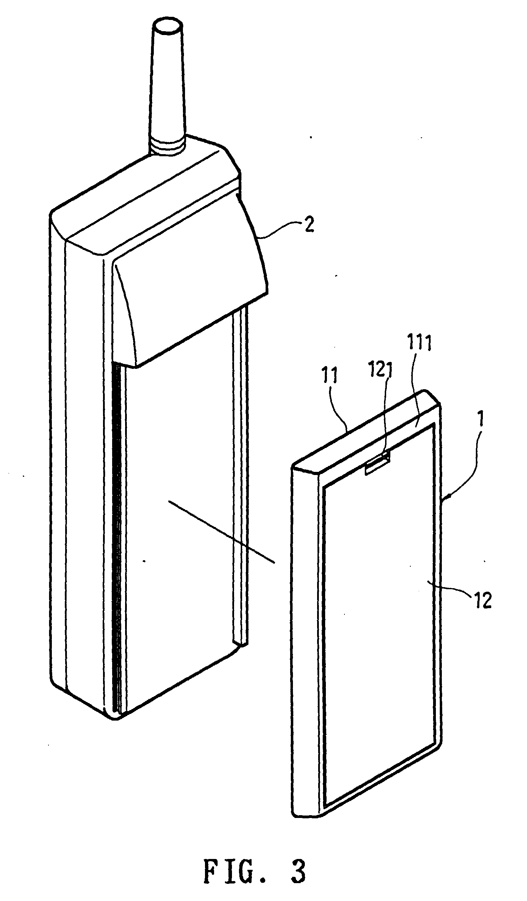

Bezugnehmend auf Fig. 1 bis 3 ist ein Batteriehalter 1 in Form eines rechteckigen Kastens hergestellt und an der Rückseite eines Mobiltelefons 2 befestigt. Der Batteriehalter 1 hält eine Batterie, die die für das Mobiltelefon 2 notwendige Arbeitsspannung liefert, und besteht aus einem Gehäuse 11 und einer Abdeckplatte 12. Das Gehäuse 11 und die Abdeckplatte 12 weisen eine jeweilige Unterseite auf, die zueinander drehbar sind, so daß die Abdeckplatte 12 nach außen gedreht werden kann, um das Gehäuse 11 zu öffnen, oder nach innen gedreht werden kann, um das Gehäuse 11 zu schließen. Das Gehäuse 11 weist einen Halteflansch 111 auf, der sich von seiner Vorderseite an der Oberseite nach unten erstreckt. Die Abdeckplatte 12 weist an ihrer Oberseite in der Mitte einen federnden Haltestreifen 121 auf. Wenn die Abdeckplatte 12 auf dem Gehäuse 11 geschlossen ist, wird der federnde Haltestreifen 121 in Eingriff mit dem Halteflansch 111 des Gehäuses 11 gezwungen und somit die Abdeckplatte 12 in der geschlossenen Position gehalten.

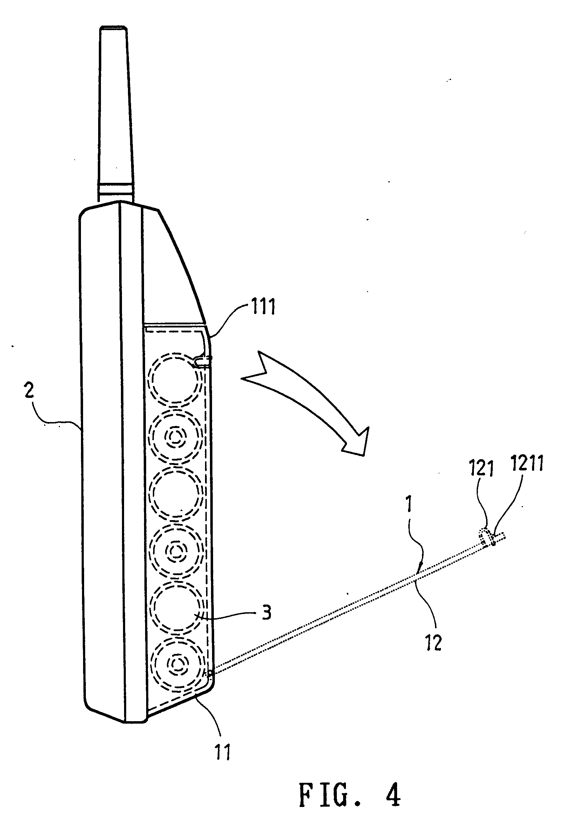

Bezugnehmend auf Fig. 4 ist der federnde Haltestreifen 121 aus der Abdeckplatte 12 herausgeschnitten und in eine im wesentlichen bogenförmige Gestalt gebogen, wobei ein Feststellblock 1211 sich von seiner Oberseite erhebt und wie ein rechtwinkliges Dreieck gestaltet ist. Wenn die Batterie 3 in das Gehäuse 11 eingesetzt ist, wird die Adeckplatte 12 geschlossen und wird der Feststellblock 1211 des federnden Haltestreifens 121 der Abdeckplatte 12 mit dem Halteflansch 111 des Gehäuses 11 in Eingriff gezwungen, und somit wird die Abdeckplatte 12 in der geschlossenen Position gehalten. Wenn der federnde Haltestreifen 121 nach unten gedrückt wird, wird der Feststellblock 1211 von dem Halteflansch 111 des Gehäuses 11 gelöst, und somit wird die Abdeckplatte 12 von dem Gehäuse 11 geöffnet.

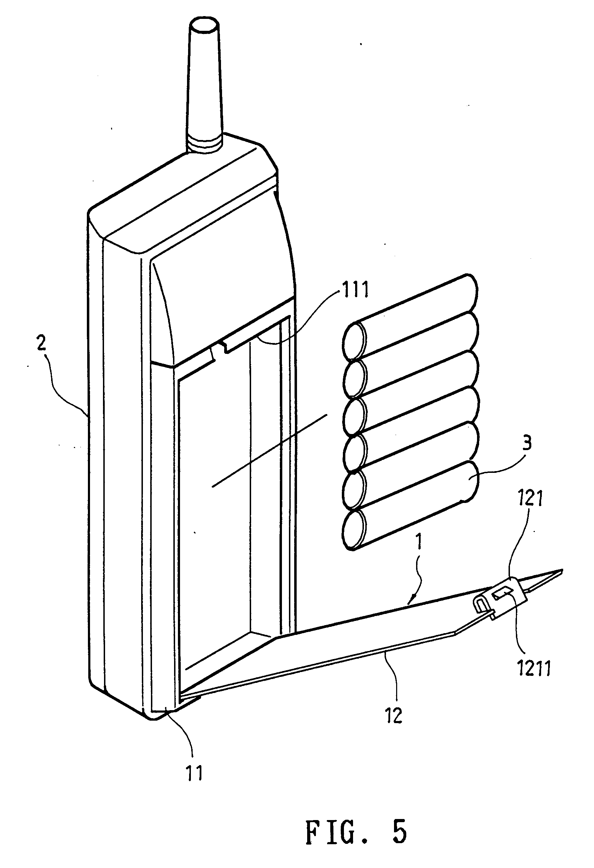

Bezugnehmend auf Fig. 5 und Fig. 2 und 4 weist der Feststellblock 1211 eine geneigte Vorderseite und eine vertikale Rückseite auf. Wenn die Abdeckplatte 12 an dem Gehäuse 11 geschlossen wird, wird die geneigte Vorderseite des Feststellblocks 1211 über den Halteflansch 111 des Gehäuses 11 bewegt, wobei dadurch die vertikale Rückseite des Feststellblocks 1211 mit dem Halteflansch 111 des Gehäuses 11 in Eingriff gezwungen wird. Wenn der federnde Haltestreifen 121 nach unten gedrückt wird, wird der Feststellblock 1211 abgesenkt und von dem Halteflansch 111 des Gehäuses 11 gelöst, und somit wird die Abdeckplatte 12 von dem Gehäuse 11 zum Auswechseln der Batterie 3 geöffnet.

Die in der vorangehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

### Bezugszeichenliste

- 1: Batteriehalter
- 2: Mobiltelefon
- 3: Batterie
- 11: Gehäuse
- 12: Abdeckplatte
- 111: Halteflansch
- 121: Haltestreifen
- 1211: Feststellblock

## Patentansprüche

1. Batteriehalter (1) mit einem an eine Rückseite eines Mobiltelefons (2) befestigten Gehäuse (11) zum Halten einer Batterie (3) zum Bereitstellen der für das Mobiltelefon (2) notwendigen Arbeitsspannung, und einer Abdeckplatte (12), die eine vordere Öffnung des Gehäuses (11) abdeckt, wobei das Gehäuse (11) eine Unterseite, eine Oberseite und einen Halteflansch (111) umfaßt, der sich von der Oberseite des Gehäuses (11) nach unten erstreckt; die Abdeckplatte (12) eine Unterseite, die zu der Unterseite des Gehäuses (11) drehbar ist, eine Oberseite und einen mit der Oberseite der Abdeckplatte (12) integralen federnden Haltestreifen (121) aufweist, wobei der federnde Haltestreifen (121) einen Feststellblock (1211) aufweist, der mit dem Halteflansch (111) des Gehäuses (11) in Eingriff gezwungen wird, um die Abdeckplatte (12) an ihrem Platz zu halten, wenn die Abdeckplatte (12) auf dem Gehäuse (11) geschlossen ist.

2. Batteriehalter nach Anspruch 1, dadurch gekennzeichnet, daß der federnde Haltestreifen (121) aus der Oberseite der Abdeckplatte (12) herausgeschnitten und in eine im wesentlichen bogenförmige Gestalt gebogen ist.

3. Batteriehalter nach Anspruch 1, dadurch gekennzeichnet, daß der Feststellblock (1211) des federnden Haltestreifens (121) wie ein rechtwinkliges Dreieck gestaltet ist.
